# EUROPEAN PATENT APPLICATION

(11) **EP 1 898 626 A2**
(43) Date of publication of application: **12.03.2008**
(21) Application number: 07016647.5
(22) Date of filing: 24.08.2007
(51) Int. Cl.: H04N 1/56

(54) **Image color determining device and image color determining method**

(30) Priority: 06.09.2006 JP 2006241192
(71) Applicant: Murata Machinery, Ltd., 3 Minami Ochiai-cho, Kisshoin Minami-ku, Kyoto-shi, Kyoto (JP)
(72) Inventor: Minamino, Katsushi, Kyoto 612-8686 (JP)
(74) Representative: Schoppe, Fritz

(57) **Abstract**

An image determining device according to the present invention includes a block determining section, a block counting section, and an image determining section. The block determining section determines a color indicated by each of a plurality of blocks obtained by dividing a target image from a predetermined plurality of determining colors. The block counting section counts the number of blocks indicating the determining color for each of the plurality of determining colors based on the determination result of the block determining section. The image determining section determines if the target image is a single color image, a two color image, a full color image, or a monochrome image based on the counted result of the block counting section.

## Description

### CROSS-REFERENCE TO RELATED APPLICATIONS

This application claims priority under 35 U.S.C. 119 to Japanese Patent Application No. 2006-242189, filed on September 6, 2006, and Japanese Patent Application No. 2006-242193, filed on September 6, 2006, which applications are hereby incorporated by reference in its entirety.

### BACKGROUND OF THE INVENTION

### 1. Field of the Invention

The present invention relates to a technique of determining a color of an image.

### 2. Description of the Related Art

Generally, a device having a color printing function has a color mode in which a print paper is printed in color and a monochrome mode in which the print paper is printed in monochrome (only tone representation of achromatic color), where a target image is printed in one of processing modes. Normally, the processing mode is selected by a user, but printing is sometimes performed in the processing mode that is not adapted to an actual image color due to selection mistake such as a monochrome image being printed in color mode. A technique of automatically determining whether the image is a color image or a monochrome image is already known. For example, a technique of dividing the image into a plurality of blocks, determining a block color representing the color contained in each block, and determining whether the image is a color image or a monochrome image based on the result of counting the number of block colors in the image is known.

### SUMMARY OF THE INVENTION

Generally, printing is performed using toners of four colors of C, M, Y, and K in a color mode of printing in color. It is inefficient to carry out printing using a toner of all four colors when an image to be printed is a single color image composed only of a color component corresponding to one chromatic color or when the image is a two color image composed only of the color components corresponding to two colors.

In view of the above problems, it is a first object of the present invention to provide a technique of accurately determining whether the image is a single color image, a two color image, a full-color image, or a monochrome image.

A second object of the present invention is to provide a technique in which a color material of the chromatic color is not used more than is necessary.

In order to overcome the problems described above, preferred embodiment of the present invention relates to an image color determining device including a block determining section, a block counting section, and an image determining section. The block determining section determines a color indicated by each of a plurality of blocks obtained by dividing a target image from a predetermined plurality of determining colors. The block counting section counts the number of blocks indicating the determining color for each of the plurality of determining colors based on the determination result of the block determining section. The image determining section for determining if the target image is a single color image, a two color image, a full color image, or a monochrome image based on the counted result of the block counting section. The influence of noise when determining a type of the target image huts can be reduced since the color is determined for each of the plurality of blocks obtained by dividing the target image. Consequently, whether the image is the single color image, the two color image, the full color image, or the monochrome image is accurately determined.

In the present invention, the image determining section preferably determines that the determining color is present in the target image when the number of blocks indicating the determining color exceeds a predetermined first threshold value for each of the plurality of determining colors. Thus, the color present in the target image can be easily determined.

Furthermore, in the present invention, the image determining section preferably determines the target image as the full color image when the number of blocks indicating the determining color exceeds a predetermined second threshold value higher than the first threshold value for at least one chromatic color of the plurality of determining colors. As determination is made as full color image when occupying a certain relatively wide range in the entire image, a process that does not give an unpleasant feeling to the user is subsequently performed.

Moreover, in the present invention, a printer unit for selectively using a color material of the plurality of colors based on the determination result of the image determining section is preferably arranged. The color material thus will not be used more than is necessary.

In the present invention, when determined that only one chromatic color is present and black is present out of the plurality of determining colors in the target image in a determination of the image determining section, the print unit preferably uses only the color material of black and prints while emphasizing a portion corresponding to the chromatic color in the target image. The color material of the chromatic color thus will not be used more than is necessary.

Moreover, in the present invention, a scanning unit for scanning a document and acquiring an image; and a transforming section for transforming a resolution of the image acquired by the scanning unit are arranged; wherein the target image is an image before the resolution is transformed by the transforming section.

In the present invention, a copy unit for scanning a document and copying on a recording paper; a setting unit for setting a magnification of copy by the copy unit; and an averaging section for averaging values for every plurality of pixels in the target image to obtain unit data are arranged; wherein the averaging section changes the number of pixels to be averaged according to the magnification.

An image color determining device according to the present invention includes a counting section, an image determining section, and an output section. The counting section counts the number of elements related to each of a predetermined plurality of determining colors based on a color of an element contained in a target image. The image determining section determines a color present in the target image out of the plurality of determining colors based on the counted result of the counting section. The output section outputs the target image as either color or monochrome. The output section outputs the target image in monochrome while emphasizing a portion corresponding to one of the two colors when the image determining section determines that only two colors are present in the target image. The color material of the chromatic color thus will not be used more than is necessary.

In the present invention, the output section preferably outputs the target image in monochrome while emphasizing a portion corresponding to a chromatic color when determined that one chromatic color and black out of the plurality of determining colors are present in the target image. The color material of the chromatic color thus will not be used more than is necessary.

An image color determining method according to the present invention includes step (a), step (b), and step (c). Step (a) determines a color indicated by each of a plurality of blocks obtained by dividing a target image from a predetermined plurality of determining colors. Step (b) counts the number of blocks indicating the determining color for each of the plurality of determining colors based on the determination result of step (a). Step (c) determines if the target image is a single color image, a two color image, a full color image, or a monochrome image based on the counted result of step (b). Thus, influence of noise when determining the type of the target image can be reduced since the color is determined for each of the plurality of blocks obtained by dividing the target image. Consequently, whether the image is the single color image, the two color image, the full color image, or the monochrome image is accurately determined.

An image color determining method according to the present invention includes step (a), step (b), and step (c). Step (a) counts the number of elements related to each of a predetermined plurality of determining colors based on the color of the element contained in a target image. Step (b) determines a color in the target image out of the plurality of determining colors based on the counted result of step (a). Step (c) outputs the target image as either color or monochrome. In step (c) the target image is output in monochrome while emphasizing a portion corresponding to one of the two colors when determined that only two colors are present in the target image in step (b). The color material of the chromatic color thus will not be used more than is necessary.

Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 is a perspective view showing an outer appearance configuration of a multifunction peripheral;

Fig. 2 is a block diagram showing an internal configuration of the multifunction peripheral;

Fig. 3 is a block diagram showing processing sections related to the operation of a copy function;

Fig. 4 is a flow chart showing a flow of an image determining process;

Fig. 5 is a flow chart showing a flow of an image determining process;

Fig. 6 is a view showing a color plane used in color determination of the unit data; and

Fig. 7 is a view describing a method of acquiring the color plane.

### DETAILED DESCRIPTION OF PREFERRED EMBODIMENTS

The embodiments of the present invention will now be described with reference to the drawings.

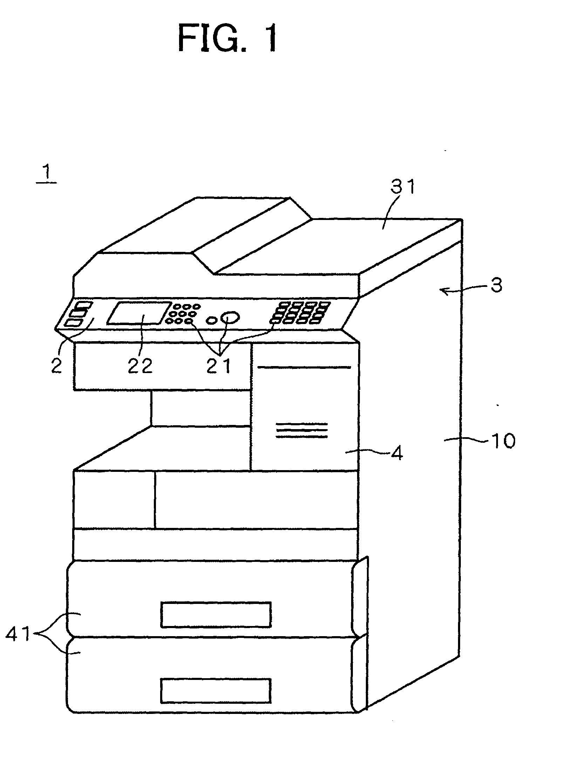

<1. Device configuration>
Fig. 1 is a perspective view showing an outer appearance configuration of a multifunction peripheral 1 or a device according to a first embodiment of the present invention. The multifunction peripheral 1 is also referred to as a "MFP device" and is configured as a device having a plurality of functions such as facsimile function, copy function, scan function, and print function. The multifunction peripheral 1 also has a function of an image color determining device for making a determination related to the color of the image to be processed.

The facsimile function is a function of transmitting and receiving the image with the opposing device via public switching telephone network or network. The copy function is a function of acquiring the image by scanning a document and printing the image on a recording paper to duplicate a content of a document. The scan function is a function of acquiring the image by scanning the document and internally storing the image. The print function is a function of printing the image on the recording paper.

As illustrated in the figure, the multifunction peripheral 1 includes a main body 10, and a book cover 31 having an ADF (Auto Document Feeder) that opens and closes with respect to the main body 10. An operation panel 2 serving as a user interface is arranged on a front face side on an upper part of the main body 10. The operation panel 2 includes an operating section 21 configured by a plurality of switches operable by a user, and a display function 22 configured by a liquid crystal display or the like for displaying various information. The display function 22 has a touch panel function, and is responsible for one part of the function for accepting the operation of the user. That is, the user operation such as input of various commands and data is accepted by the entire operation panel 2. The magnification in the copy function, for example, is desirably set by the user at the operation panel 2.

A scanner unit 3 for scanning the document is arranged on the upper part of the main body 10 of the multifunction peripheral 1, and a printer unit 4 for printing on the recording paper is arranged inside the main body 10.

The scanner unit 3 has a function of scanning the document and acquiring the image showing the content of the relevant document in each facsimile function, copy function, and scan function. A line sensor configured by CCD (Charge Coupled Device) and the like is arranged in the scanner unit 3. The scanning method of the scanner unit 3 includes FBS scanning method and ADF scanning method. The FBS scanning method is the method of scanning the content of the document placed on a contact glass under the book cover 31 with the line sensor. The ADF scanning method is the method of automatically retrieving one by one a document stack including a plurality of set documents by ADF and continuously scanning the document with the line sensor. Furthermore, the ADF scanning method includes a method of moving the document while having an optical system stationary (sheet through method) and a method of moving the optical system while having a document stationary. In the latter case, the document that is retrieved one by one is temporarily rested on the contact glass and scan while the optical system is being moved, and thereafter, the relevant document is discharged and the next document is again retrieved and rested on the contact glass. The line sensor corresponding to each of R (Red), G (Green), and B (Blue) is arranged. The image in which each pixel is represented in RGB is thereby acquired in the scanner unit 3. The interval between the three line sensors of R, G, and B is fixed and, for example, is an interval corresponding to four lines at a resolution of 600 dots per inch (dpi).

The printer unit 4 is configured by a printing mechanism or the like of electrophotographic method, and performs printing on the recording paper based on the image to be printed. The recording paper is supplied from a paper feed unit 41 arranged below the printer unit 4. The toners of four colors of C (Cyan), M (Magenta), Y (Yellow), and K (Black) are used for the color materials used in printing in the printer unit 4.

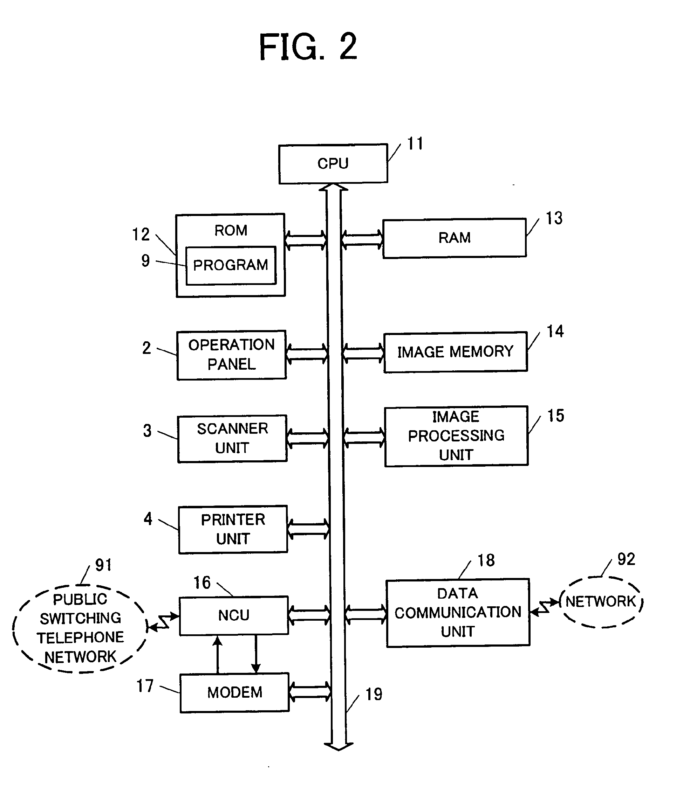

Fig. 2 is a block diagram showing in frame format an internal configuration of the multifunction peripheral 1. As illustrated in the figure, the multifunction peripheral 1 incorporates a computer responsible for device control. More specifically, the multifunction peripheral 1 includes a CPU 11, a ROM 12, and a RAM 13. A program 9 serving as a firmware is stored in the ROM 12, where various functions for controlling each section of the multifunction peripheral 1 are realized by executing a calculation process by the CPU 11 serving as a main control section according to the program 9. The RAM 13 is used as a work region in the calculation process of the CPU 11.

The program 9 is stored in the ROM 12 in advance, but a new program 9 may be stored in the ROM 12 by scanning from a recording medium recorded with the program, downloading from an external server via a network 92, or the like.

The CPU 11 is electrically connected to each section of the multifunction peripheral 1 such as the operation panel 2, the scanner unit 3, and the printer unit 4 described above by way of a bus line 19. Each section is thus controlled by the CPU 11. The user operation accepted at the operation panel 2 is input to the CPU 11 as a signal, so that the multifunction peripheral 1 performs the operation corresponding to the user operation.

The multifunction peripheral 1 further includes an image memory 14, an image processing unit 15, a network control unit (NCU) 16, a modem 17, and a data communication unit 18.

The image memory 14 is a non-volatile storage device configured by hard disc, flash memory, and the like. Images obtained in the scanner unit 3, images received by facsimile communication, and the like are stored in the image memory 14.

The image processing unit 15 is a hardware circuit that performs a predetermined process on the image to be processed such as the image obtained in the scanner unit 3 and the image to be printed by the printer unit 4.

The NCU 16 and the modem 17 are processing sections that realize the facsimile function through a public switching telephone network 91. That is, the NCU 16 is a hardware circuit for performing operations such as closing and opening a direct current loop of the analog public switching telephone network, and connecting the modem 17 to the public switching telephone network as necessary. The modem 17 performs modulation and demodulation of the image data for facsimile communication.

The data communication unit 18 is an interface for communicating via a network 92 such as Internet and LAN (Local Area Network). Data communicating function with external devices connected to the network 92, and communicating function serving as an Internet facsimile device are realized by the data communication unit 18.

Each unit of the image memory 14, the image processing unit 15, the NCU 16, the modem 17, and the data communication unit 18 are electrically connected to the CPU 11 by way of the bus line 19. Thus, such units also operate under the control of the CPU 11.

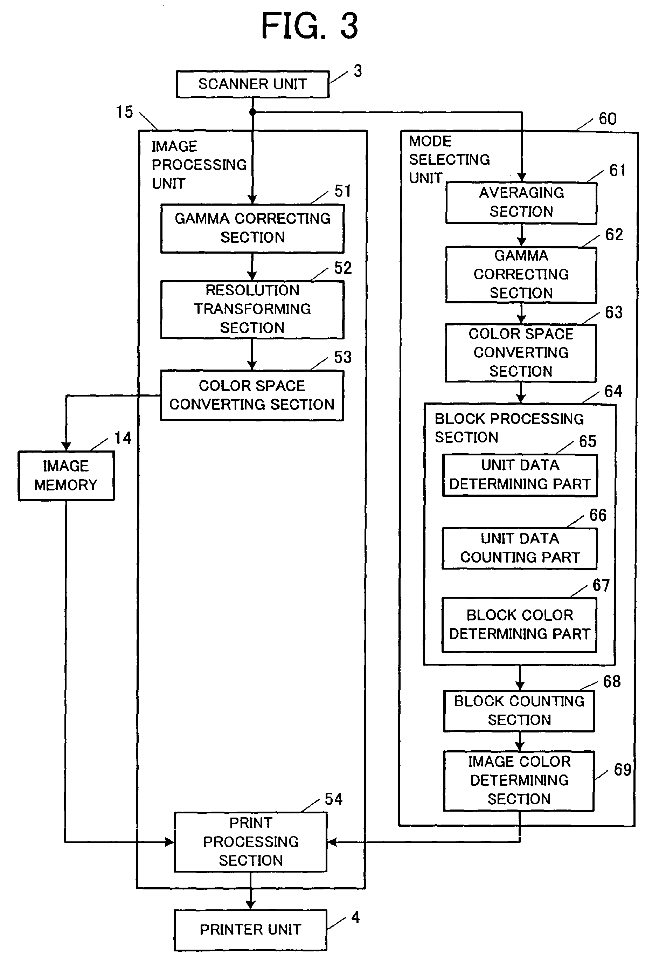

<2. Basic Operation>
Fig. 3 is a block diagram showing processing sections related to the operation of the copy function of the multifunction peripheral 1. A gamma correcting section 51, a resolution transforming section 52, a color space converting section 53, and a print processing section 54 in the figure show, in frame format, the functions of the image processing unit 15 or the hardware circuit as processing sections. Amode selecting unit 60 in the figure shows, in frame format, the functions realized in software as processing sections by executing the calculation process by the CPU 11 according to the program 9.

When the operation of the copy function is executed, the document is first scanned by the scanner unit 3, and the image in which each pixel is represented in RGB is acquired. The acquired image is input to the image processing unit 15, and first performed with the gamma correction by the gamma correcting section 51, and then the resolution thereof is transformed as necessary by the resolution transforming section 52 to the resolution corresponding to the magnification set by the user through the operation panel 2. Subsequently, the image is input to the color space converting section 53, and the value of each pixel is color space converted from RGB to YCrCb, and the like. The image performed with such processes is once stored in the image memory 14.

The stored image is again input to the image processing unit 15, and converted to print data of a format printable by the printer unit 4 by the print processing section 54. The image is printed on the recording paper in the printer unit 4 based on the print data, and the document is duplicated.

In the multifunction peripheral 1, the processing modes related to printing of the copy function includes "full color mode", "two color mode", "single color mode", and "monochrome mode". Specifically, printing of full color image in "full color mode", printing of two color image in "two color mode", printing of single color image in "single color mode", and printing of monochrome image in "monochrome mode" are respectively performed by the process of the print processing section 54. The single color image is an image (image composed of color components corresponding to one chromatic color) having a tone of one hue of the chromatic color. The two color image has two types. One of the types of the two color image is an image (image composed of color component corresponding to one chromatic color and black component) having the tones of one hue of the chromatic color and the achromatic color. The other type of the two color image is an image (image composed of color components corresponding to two chromatic colors) having the tones of two hues of the chromatic color. The one hue of the chromatic color can be represented by selectively using "any one color" or "any two colors" of the toners of CMY. The achromatic color can be represented by using the toner of K (black).

The processing modes are selected by the mode selecting unit 60. The image (i.e., image obtained by the scanner unit 3) to be processed in executing the operation of the copy function is input to the image processing unit 15 and also to the mode selecting unit 60. The mode selecting unit 60 determines if the type of the input image is full color image, two color image, single color image, or monochrome image. The mode selecting unit 60 then selects the processing mode based on the determination result, and inputs the selected processing mode to the print processing section 54.

As illustrated in the figure, the mode selecting unit 60 includes an averaging section 61, a gamma correcting section 62, a color space converting section 63, a block processing section 64, a block counting section 68, and an image color determining section 69. The block processing section 64 further includes a unit data determining part 65, a unit data counting part 66, and a block color determining part 67. According to such functions, the image determining process of determining the type of the image to be processed is realized.

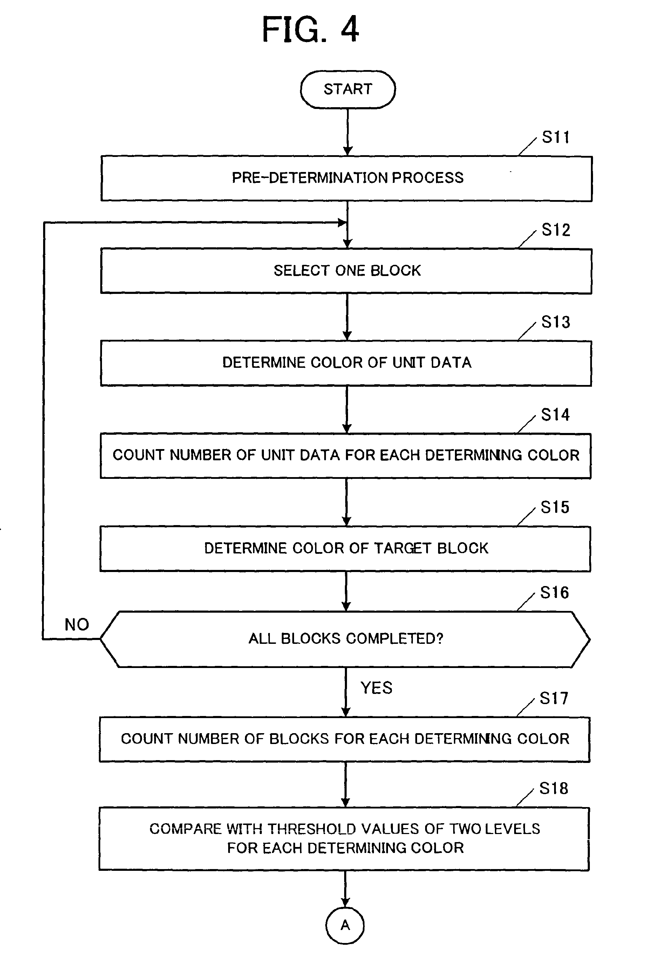

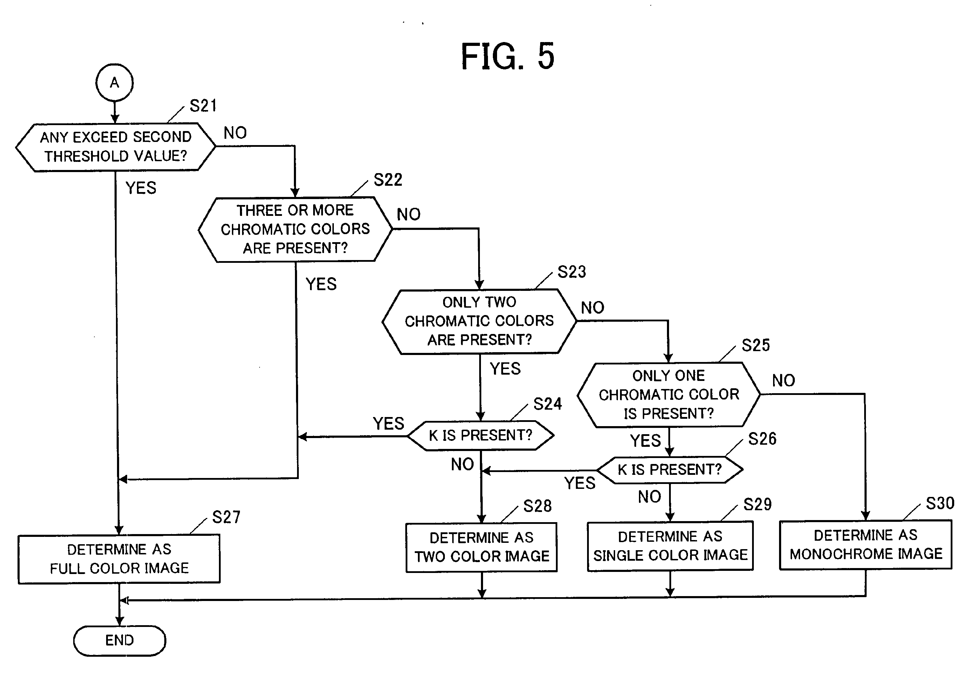

<3. Image determining process>
Figs. 4 and 5 are flow charts showing a flow of the image determining process. The flow of the image determining process will now be described with reference to Figs. 3 to 5. The image to be processed is referred to as "target image" below.

First, an averaging process by the averaging section 61, the gamma correcting process by the gamma correcting section 62, and a color space converting process by the color space converting section 63 are performed on the target image as a pre-determination process prior to determining the color of the target image (step S11).

In the averaging section 61, four pixels of two in the vertical direction (sub-scanning direction) by two in the horizontal direction (main scanning direction) adjacent to each other in the target image are assumed as one pixel set. The values of the pixels are averaged for all the pixel sets contained in the target image. An average value obtained for every pixel set is thus assumed as an element of unit indicating one color in the target image. The average value for every pixel set is assumed as "unit data". The unit data is the average value of the values of the pixels represented in RGB, and thus is represented in RGB.

The pixels of the target image may be used as it is for the unit data indicating one color without performing the averaging process. However, if the average value for every pixel set is used instead of the pixel for the unit data, false color due to microscopic mechanical error of the line sensor and the like in the scanner unit 3 and false color due to magnification of the copy function can be corrected, and is thus preferable in that the accuracy of the subsequent determination enhances. If the magnification is changed, the scanning speed (relative movement speed of the optical system and the document (typically, movement speed of the carriage mounted with the optical system)) in the sub-scanning direction is changed to change the resolution in the sub-scanning direction of the image. Therefore, if the resolution is 600dpi in 100% magnification, the resolution becomes 420dpi in 70% reduction, and when the interval of the line sensor corresponds to four lines in 600dpi, the interval corresponds to 2.8 lines in 420dpi. Thus, if there is a difference of 2.8 lines, a shift of 0. 2 lines is created regarding the scanning position on the document even if delay for three lines is performed regarding scanning, and such shift produces the false color. The production of false color caused by magnification is thus also prevented by the averaging process.

The target image performed with the averaging process is then performed with gamma correction by the gamma correcting section 62 with the unit data as the target. Thereafter, the value of each unit data is color space converted from RGB to Lab (luminance L, chromaticity a, b) by the color space converting section 63.

The target image performed with the pre-determination processes is then input to the block processing section 64. In the block processing section 64, the processes shown in steps S13 to S15 are performed by blocks with each of the plurality of blocks obtained by dividing the target image as the target. Each block becomes an element constituting the target image.

In the present embodiment, a total of 900 unit data of 30 by 30 in the target image configures one block. This one block corresponds to the region of 5mm by 5mm in the document when scanning is performed at 600dpi, and the four pixels of two by two are averaged to obtain the unit data in the scanner unit 3. Therefore, since the size of the A4 document is 210mm by 297mm, the target image obtained from the A4 document is divided into a total of 2520 blocks of 42 by 60.

In the process of the block processing section 64, one block is first selected from the plurality of blocks contained in the target image as target block. The target block hereinafter becomes the object of process (step S12).

One color indicated by unit data is determined from seven determining colors of six chromatic colors and K (black) with respect to each of the 900 unit data contained in the target block. In the present embodiment, six colors of C, M, Y, which are three primary colors of the color, and R, G, B, which are three primary colors of light, are used for the determining colors of the chromatic color. The method of determining the color of the unit data will be hereinafter described in detail (step S13).

The number of unit data indicating the determining color is counted for each of the seven determining colors by the unit data counting part 66 based on the determination result. That is, number of unit data indicating C, number of unit data indicating M, number of unit data indicating Y, number of unit data indicating R, number of unit data indicating G, number of unit data indicating B, and number of unit data indicating K are respectively obtained (step S14).

The color indicated by the target block is then determined by the block color determining part 67 based on the counted result. Specifically, the number of unit data indicating the corresponding determining color and the predetermined threshold value (hereinafter referred to as "block determining threshold value") are compared for each of the seven determining colors. The block determining threshold value is stored in the ROM 12 and the RAM 13 in advance, and is desirably a value unique to each determining color.

If the determining color in which the number of unit data exceeds the block determining threshold value is present through such comparison, the relevant determining color is determined as the color indicated by the target block. Therefore, only one of the seven determining colors may be determined as the color indicated by the target block, or a plurality of colors may be determined as the color indicated by the target block. For example, if only the number of unit data related to C exceeds the block determining threshold value, and the number of unit data related to other determining colors is lower than or equal to the block determining threshold value, the color indicated by the target block is determined as one color of C. If the number of unit data related to C, Y, and K each exceeds the block determining threshold value and the number of unit data related to other determining colors is lower than or equal to the block determining threshold value, the color indicated by the target block is determined as three colors of C, Y, and K. Seven color flags corresponding to the seven determining colors are set to show the determination result. Regarding the color flag, "1" is set when the target block shows the corresponding color and "0" is set when the target block does not show the corresponding color (step S15).

After determination of the color regarding one target block is performed in such manner, judgment is made on whether or not non-determined block is present. If so (No in step S16), the next target block is determined (step S12), and processes (steps S13 to S15) similar to the above are repeated for the new target block to determine the color. The processes are repeated and ultimately, a determination of color is performed for all blocks contained in the target image. That is, the seven color flags are set for all the blocks.

After the determination of the color for all blocks is performed (Yes in step S16), the number of blocks indicating the corresponding determining color is counted for the seven determining colors by the block counting section 68 based on the determination result (color flag of each block). That is, number of blocks indicating C, number of blocks indicating M, number of blocks indicating Y, number of blocks indicating R, number of blocks indicating G, number of blocks indicating B, and number of blocks indicating K are obtained. Since one block sometimes shows a plurality of colors, one block is sometimes counted for a plurality of determining colors (step S17).

Whether the type of the target image is full color image, two color image, single color image, or monochrome image is determined by the image color determining section 69 based on the counted result.

Specifically, the number of blocks indicating the determining color and a predetermined image determining threshold value are first compared for the seven determining colors. In this case, comparison is performed with only one image determining threshold value (first threshold value) for K, but comparison is made with two different image determining threshold values (first threshold value, second threshold value) for the determining colors of the chromatic color. The second threshold value is a value higher than the first threshold value, and is desirably greater than or equal to 1/3, more preferably, greater than or equal to 1/2 of the total number of blocks contained in the target image. Such image determining threshold values are also stored in the ROM 12 and the RAM 13 in advance. The image determining threshold value including the first threshold value and the second threshold value is desirably a value unique to each determining color (step S18).

If the determining color in which the number of unit data exceeds the first threshold value is present in six determining colors of the chromatic color according to the comparison, the relevant determining color is judged as being present in the target image. If the number of unit data of K exceeds the image determining threshold value (first threshold value), K (black) is judged as being present in the target image.

If at least one determining color in which the number of unit data exceeds the second threshold value is present (Yes in step S21 of Fig. 5) in the six determining colors of the chromatic color according to the comparison, the target image is determined as the full color image (step S27).

If the determining color in which the number of unit data exceeds the second threshold value is not present (No in step S21), determination is made on whether or not three or more determining colors of the chromatic color are present in the target image (step S22). If three or more colors are present (Yes in step S22), the target image is determined as the full color image (step S27).

If three or more chromatic colors are not present in the target image (No in step S22), determination is made on whether or not only two determining colors of the chromatic color are present in the target image (step S23). If only two colors are present (Yes in step S23), determination is further made on whether or not K is present in the target image (step S24). If K is present (Yes in step S24), the target image is determined as the full color image (step S27), and if K is not present (No in step S24), the target image is determined as the two color image (step S28).

If two chromatic colors are not present in the target image (No in step S23), determination is made on whether or not only one determining color of the chromatic color is present in the target image (step S25). If only one color is present (Yes in step S25), determination is further made on whether or not K is present in the target image (step S26). If K is present (Yes in step S26), the target image is determined as the two color image (step S28), and if K is not present (No in step S26), the target image is determined as the single color image (step S29).

If not even one chromatic color is present in the target image (No in step S25), the target image is determined as the monochrome image (step S30).

According to the above processes, determination is made on whether the type of the target image is full color image, two color image, single color image, or monochrome image. After the type of the target image is determined, the processing mode related to the printing of the copy function is selected based on the determination result. Specifically, "full color mode" is selected for the full color image, "two color mode" for the two color image, "single color mode" for the single color image, and "monochrome mode" for the monochrome image.

The toners used by the printer unit 4 are C, M, Y, and K. Thus, in "two color mode" and "single color mode", the C, M, or Y in the image can be represented by selectively using the toner of one of C, M, and Y. R, G, or B in the image can be represented by selectively using the toners of two colors of C, M, and Y. That is, the toners of M and Y are selectively used for R, C and Y for G, and C and M for B. When representing hue other than C, M, Y, R, G, and B, the ratio of the toners of the two colors is changed. For example, the ratio of M is greater in R closer to M (M-tinged R) than the ratio of M and Y in R.

In the "single color mode", the print data having luminance or lightness of the image to be printed as the value of the single color (chromatic color determined to be present) by the processing of the print processing section 54 is generated, and printing is performed in the printer unit 4. Each single color of C, M, Y, R, G, and B is printed at the toner ratio described below. "1" and "0" in the ratio are merely illustrative.

Single color C ··· C:M:Y=1:0:0; single color M ··· C:M:Y=0:1:0; single color Y ··· C:M:Y=0:0:1; single color R ··· C:M:Y=0:1:1; single color G ··· C:M:Y=1:0:1; single color B ··· C:M:Y=1:1:0. Furthermore, in the "two color mode" of printing the two color image of the type having the tone of one hue of the chromatic color and the achromatic color, the print data is generated using the value of luminance or lightness of the image to be printed for the portion to be printed in black out of the image to be printed, and the print data is generated using the value of color saturation of the image for the portion to be printed in chromatic color. Regarding the portion to be printed in black, the print density is changed according to the luminance or lightness of the image, where the print density is lighter if the luminance or the lightness is high and the print density is darker if the luminance or the lightness is low. Regarding the portion to be printed in chromatic color, the print density is changed according to the color saturation of the image, where the print density is darker if the color saturation is high and the print density is lighter if the color saturation is low.

An example of changing the print density according to the color saturation in the case of chromatic color has been described, but the print density can be changed according to the value of the color component without calculating the color saturation. For instance, when printing in red (R), the print data can be generated using the value of the positive portion of the Cr component of the values of YCrCb of the image. Similarly, when printing in blue (B), the print data can be generated using the value of the positive portion of the Cb component. When printing in green (G), the print data can be generated using the value of the negative portion of the Cr component. When printing in yellow (Y), the print data can be generated using the value of the negative portion of the Cb component.

Therefore, in the multifunction peripheral 1, the color indicated by each of the plurality of blocks obtained by dividing the target image is determined from the seven determining colors of C, M, Y, R, G, B, and K by the block processing section 64. The number of blocks indicating the relevant determining color is counted for each of the seven determining colors by the block counting section 68 based on the determination result. Determination is made on whether the target image is single color image, two color image, full-color image, or monochrome image by the image color determining section 69 based on the counted result. Since the color is determined for each of the plurality of blocks obtained by dividing the target image, influence of noise can be reduced in determining the type of the target image, and an accurate determination can be performed. As a result, even if the target image is a color image, printing can be performed in a processing mode ("two color mode", "single color mode") that selectively uses the toner from four colors of C, M, Y, and K, and thus the toner can be efficiently used.

When the number of blocks indicating the determining color of a certain chromatic color exceeds a predetermined second threshold value higher than the first threshold value, the color resembling the determining color occupies a relatively wide region in the entire target image, and thus a minor difference in color greatly influences the impression received by a human viewing the target image. Therefore, if the number of blocks exceeds the second threshold value regarding at least one chromatic color of the seven determining colors, such target image is determined as the full color image so that a printing result that does not give an unpleasant feeling to the user is obtained in the subsequent printing.

Since the color of the block is determined by counting the number of unit data, and thereafter, the number of blocks is counted, the counting process is performed in two stages. Thus, a maximum value to be counted may be the total number of unit data contained in the block (900 in the present embodiment), or may be the total number of blocks contained in the target image (2520 in A4 size in the present embodiment). The number of digits of the counter that is required is thus greatly reduced compared to a case where the number of unit data is counted for the target image as a whole.

Furthermore, in the above embodiment, the number of unit data and the block determining threshold value are compared (step S15) after counting (step S14) for all the unit data is completed. The counting of unit data and comparison of the counted value and the block determining threshold value may be performed in parallel, where the counting for the relevant determining color may be terminated when the counted value exceeds the block determining threshold value for a certain determining color.

In the above embodiment, the number of blocks and the image determining threshold value are compared (step S18) after the counting (step S17) for all the blocks is completed, and then the type of the target image is determined (steps S21 to S30). However, the counting of blocks, comparison of the counted value and the image determining threshold value, and determination on the type of target image may be performed in parallel, where all the processes may be terminated at the point the determination on the type of target image becomes possible (e.g., at the point the number of one of the blocks exceeds the second threshold value and determined as full color image). Therefore, the number of digits of the counter that is required is further reduced.

<4. Color determining method of unit data>
The method of determining the color of the unit data in step S13 will now be described. In determination, a predetermined conversion process is performed on the chromaticity a, b of the values of each unit data represented in Lab, and a3, b3, which are the parameters (hereinafter referred to as "color parameter") related to hue and color saturation, are acquired. The value of each unit is then represented by lightness L and color parameters a3, b3.

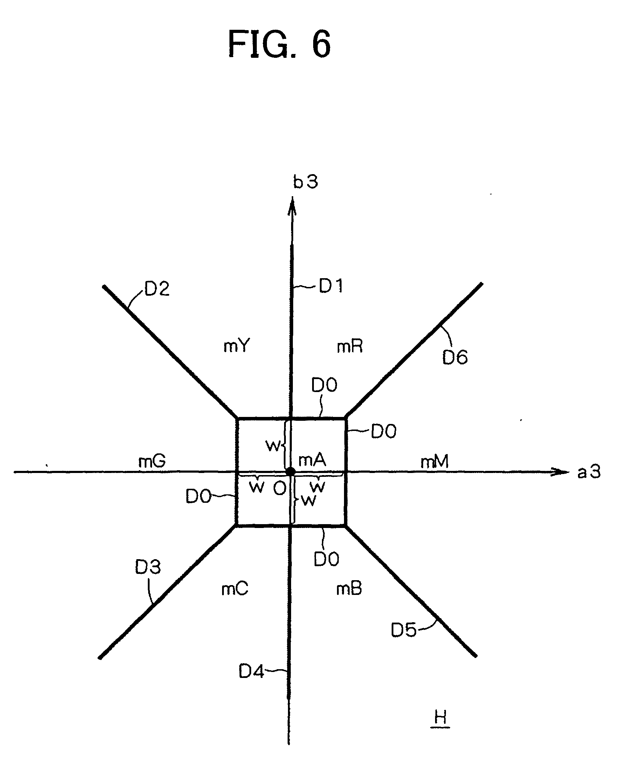

As illustrated in Fig. 6, a color plane H having an orthogonal two-dimensional coordinate system where a3 is the horizontal axis and b3 is the vertical axis is b3 is used, and the color of the unit data is determined based on whether the coordinate positions (a3, b3) indicated by the color parameters of the unit data is present at one of the positions on the color plane H. The data defining the color plane H is stored in the ROM 12 and the RAM 13 in advance.

The color plane H has a property similar to a Lab colorimetric system related to hue and color saturation, and each color is radially arranged with the origin O as the center, where the direction from the origin O indicates hue and distance from the origin O indicates color saturation.

The origin O and the vicinity thereof of the color plane H are more or less achromatic. Thus, a color saturation boundary line D0 indicating a boundary between the chromatic color and the achromatic color is set near the origin O of the color plane H. That is, an inner side of the color saturation boundary line D0 is an achromatic region mA showing the achromatic color, and an outer side of the color saturation boundary line D0 is the chromatic region showing the chromatic color. The color of the unit data is determined as achromatic color if the coordinate position (a3, b3) indicated by the color parameters of unit data is present in the achromatic region mA. If determined as the achromatic color, the lightness L of the unit data is further referenced, where the color of the unit data is determined as K if the lightness L is less than or equal to a predetermined threshold value (e.g., "0").

Six hue boundary lines D1 to D6 indicating a boundary of the hue are radially set from the origin O in the region on the outer side of the color saturation boundary line D0. The chromatic region is divided into six color regions mC, mM, mY, mR, mG, and mB each corresponding to the six determining colors C, M, Y, R, G, and B of the chromatic color by the hue boundary lines D1 to D6. Specifically, the hue boundary line D1 is a boundary of the color region mR and the color region mY; the hue boundary line D2 is the boundary of the color region mY and the color region mG; the hue boundary line D3 is the boundary of the color region mG and the color region mC; the hue boundary line D4 is the boundary of the color region mC and the color region mB; the hue boundary line D5 is the boundary of the color region mB and the color region mM; and the hue boundary line D6 is the boundary of the color region mM and the color region mR.

If the coordinate position (a3, b3) indicated by the color parameters of the unit data is present in one of the color regions mC, mM, mY, mR, mG, and mB, the color of the unit data is determined as the determining color corresponding to the color region in which the color of the unit data is present. For example, if the coordinate position (a3, b3) indicated by the color parameters is present in the color region mC, the color of the unit data is determined as C.

As illustrated in the figure, four color saturation boundary lines D0 are all set parallel to one of two coordinate axes, and are spaced apart from the origin O by the same distance corresponding to a predetermined value w. Therefore, if both absolute values of the color parameters a3, b3 of the unit data are smaller than the value w, the color of the unit data is determined as achromatic color. That is, whether or not the color of the unit data is achromatic is easily determined by simply comparing the color parameters a3, b3 and the predetermined value w.

The hue boundary lines D1, D4 are set on the vertical axis, and the other hue boundary lines D2, D3, D5, D6 are set in a direction (45 degrees with respect to coordinate axis) that equally divides each quadrant in half. Therefore, which one of the six determining colors or chromatic colors the color of the unit data is can be easily determined by simply comparing the positive or negative sign of each parameter a3, b3 and the size of the absolute value. For example, if both signs of the color parameters a3, b3 of the unit data are positive, the coordinate position is judged as being in the first quadrant, and judged as being in the color region mM if "absolute value of a3>absolute value of b3", and as a result, the color of the unit data is easily judged as M.

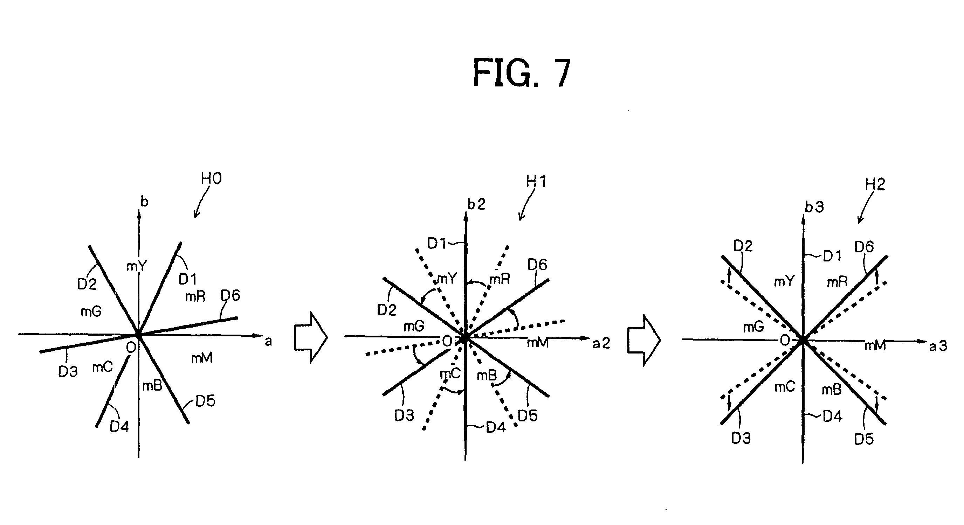

The color plane H described above is obtained by performing affine transformation such as rotation transformation and scaling transformation on the chromaticity diagram of a typical Lab colorimetric system. This method will be described below. Fig. 7 is a view describing the method of acquiring the color plane H shown in Fig. 6. In Fig. 7, the color plane H0 shown at the left corresponds to the chromaticity diagram of the typical Lab colorimetric system that has an orthogonal two-dimensional coordinate system having a as the horizontal axis and b as the vertical axis.

The hue boundary lines D1 to D6 are set with respect to the color plane H0 related to the Lab colorimetric system. The hue boundary lines D1 to D6 may be set based on the feeling of a human, but are set so that the pair of hue boundary lines that become substantially symmetric to the origin O are on one line.

The entire hue is then subjected to rotation transformation with the origin O as the center so that the hue boundary lines D1, D4 close to the vertical axis coincide with the vertical axis. The color plane H1 shown at the middle is thus obtained in Fig. 7. The color plane H1 has an orthogonal two-dimensional coordinate system having a2 as the horizontal axis and b2 as the vertical axis.

An anisotropic scaling transformation (transformation to enlarge or reduce at ratios different for vertical axis direction and horizontal axis direction) is performed on the entire hue so that the hue boundary lines D2, D3, D5, D6 not coinciding with the vertical axis are directed at 45 degrees with respect to the coordinated axes. For instance, transformation to enlarge only in the vertical axis direction or reduce only in the horizontal axis direction is performed. A color plane H2 at the right of Fig. 7 is thereby obtained. The color plane H2 has an orthogonal two-dimensional coordinate system having a3 as the horizontal axis and b3 as the vertical axis. The color saturation boundary line D0 is further set with respect to the color plane H2, whereby the color plane H shown in Fig. 6 is obtained.

Since the color of the unit data is determined using the color plane H obtained in such manner, the value of each unit data represented in Lab must also be converted so as to adapt to the color plane H. In determining the color of the unit data, the affine transformation (rotation transformation and anisotropic scaling transformation) similar to when obtaining the color plane H is performed for the chromaticity a, b of the value of each unit data, and the color parameters a3, b3 are acquired.

The color of the unit data may be determined based on which position in the color plane H0 corresponding to the chromaticity diagram of the Lab colorimetric system the coordinate position (a, b) indicated by chromaticity is present using the value of the unit data as represented in Lab. In this case, parameters other than the chromaticity do not need to be obtained. However, a slope of the hue boundary lines D1 to D6 is generally an irrational number in the color plane H0. Thus, an irrational number calculation such as inverse trigonometric function is necessary in determining the color of the unit data, whereby the determining efficiency worsens, and thus the color plane in which at least affine transformation such as rotation transformation is performed on the color plane H0 and the slope of the hue boundary lines D1 to D6 is a rational number is desirably used.

In the color determining method, the color plane indicated two-dimensionally is divided into a plurality of color regions by a line passing through an origin, and the color region to which the unit data belongs is determined by determining the positional relationship (size relationship) of the unit data and the line passing through the origin, and thus the dividing number of color regions can be easily changed. For instance, the color plane in the above example is divided into six color regions in a circumferential direction with the origin as the center, but the color region to which the unit data belongs may also be easily determined by dividing the color plane into less than or equal to five or greater than or equal to seven color regions.

<5. Transformation of resolution>
As described above, in the copy function, the resolution is transformed in the main scanning direction of the image in the resolution transforming section 52 as necessary according to the magnification set by the user. The resolution after transformation becomes the value corresponding to the magnification set by the user. For instance, when the resolution of the image before transformation (resolution of the device) is 600dpi, the resolution is transformed from 600dpi to 420dpi in the main scanning direction of the image if 70% reduction is set.

In the above embodiment, the image before the resolution is transformed is input to the mode selecting unit 60 rather than the image which resolution is transformed in the resolution transforming section 52, and image determining process is performed on such image (i.e., target image). The determining precision is thus not affected by the resolution (magnification), and a stable determination can be made. Since averaging process by the averaging section 61 is performed using the target image before the resolution is transformed, the number of pixels to be averaged is made constant (e.g., two pixels) in the main scanning direction of the target image. The averaging process in the main scanning direction of the target image is effective for the false color caused by mechanical error.

In the sub-scanning direction of the image, such transformation of resolution is not performed, and the necessary resolution is obtained by changing the relative movement speed (typically, movement speed of carriage) of the document and the optical system (carriage). That is, since the cycle for retrieving the data is constant, the relative movement speed is changed according to the set magnification (necessary resolution). For instance, the relative movement speed is twice the speed at 100% magnification in the case of 50% reduction, and 1/2 the speed at 100% magnification in the case of 200% enlargement.

As stated that a shift of 0.2 lines occurs in the case of 70% reduction, shift occurs in the scanning position of the document by the line sensor excluding some of the magnifications (e.g., integral multiples of 100% magnification) for cases other than the 100% magnification. In other words, since the relative movement speed is changed according to the magnification, each line sensor of R, G, B may not be able to scan the same position on the document, whereby shift in scanning position occurs and false color produces in the image. The extent of false color caused by magnification is greater than the false color caused by mechanical difference. That is, it is desirable to effectively correct the false color caused by magnification for the sub-scanning direction of the image.

In the above embodiment, description is made on averaging the values of four pixels of two pixels in the sub-scanning direction and two pixels in the main scanning direction in the averaging process by the averaging section 61, but the number of pixels to be averaged may be changed according to the magnification for the sub-scanning direction of the image. In this case, the number of pixels to be averaged is set large for the magnification in which the shift in the scanning position becomes relatively larger, and the number of pixels to be averaged is set small for the magnification in which the shift in the scanning position becomes relatively smaller. Specifically, the correspondence relationship between the magnification and the number of pixels to be averaged is registered in advance in the table data, and the appropriate number of pixels to be averaged is acquired with reference to the table data by the averaging section 61. The table data is stored in the ROM 12 or the like in advance.

Therefore, the false color caused by magnification is effectively corrected by changing the number of pixels to be averaged according to the magnification, and the determining precision of the image determining process is further enhanced.

<6. Other embodiments>
The embodiments of the present invention have been described, but the present invention is not limited to the above embodiments, and various modifications may be made. Other embodiments will be described below. Obviously, the embodiments described below may be appropriately combined.

For instance, in the above embodiment, the target image is determined as the two color image when only one chromatic color of the seven determining colors is present (Yes in step S25) and K (black) is determined to be present (Yes in step S26) in the target image. In this case, however, the target image may be determined as monochrome image, and printing may be performed in the monochrome mode. Normally, printing is performed based only on the luminance Y of the values (YCrCb) of the pixels of the image in the monochrome mode, but in this case, printing is performed such that a print density of the portion where the chromatic color is present is darker than other portions (e.g., lower the luminance Y of the relevant pixel by a predetermined ratio), to desirably emphasize the portion corresponding to the chromatic color. Accordingly, the toner of the chromatic color will not be used more than is necessary. This process is also considered as a process of outputting the target image in monochrome while emphasizing the portion corresponding to one of the two colors when determined that only two colors are present in the target image. The two colors in the target image may be chromatic color and achromatic color (black) as in the present example, but may be different chromatic colors. When printing the target image having two hues (chromatic colors) of R and B in the monochrome mode, the print density of the portion corresponding to one of the hues (e.g., R) is lowered and the print density of the portion corresponding to the other hue (e.g., B) is increased. The portion corresponding to the former hue is thus output in an emphasized manner.

Furthermore, the processing mode related to printing of the copy function is selected based on the determination result of the type of the target image in the above embodiment, but the processing mode related to compression of image of the scanner function may be selected.

In the above embodiment, description is made that in determining the color of the unit data, the value thereof is converted to Lab, but colorimetric system other than Lab may be used as long as it is the colorimetric system including the parameters (luminance, lightness) related to brightness and parameters (color difference, chromaticity) related to hue and color saturation such as YCrCb, YIQ, Luv.

The plurality of determining colors include K in the above embodiment, but the determining colors may only include the chromatic colors.

Description is made that the multifunction peripheral 1 functions as the image color determining device, but program similar to the above embodiment may be executed on a general-purpose computer to function the general-purpose computer device as the image color determining device.

In the above embodiment, description is made that various functions of the mode selecting unit 60 are realized in terms of software by the calculation process of the CPU according to the program, but partial or entire function may be realized by electrical hardware circuit.

While the present invention has been described with respect to preferred embodiments thereof, it will be apparent to those skilled in the art that the disclosed invention may be modified in numerous ways and may assume many embodiments other than those specifically set out and described above. Accordingly, the appended claims are intended to cover all modifications of the present invention that fall within the true spirit and scope of the present invention.

## Claims

1. An image color determining device for determining a color of a target image, the image color determining device comprising:
a block determining section for determining a color indicated by each of a plurality of blocks obtained by dividing the target image from a predetermined plurality of determining colors;
a block counting section for counting the number of blocks indicating the determining color for each of the plurality of determining colors based on the determination result of the block determining section; and
an image determining section for determining if the target image is a single color image, a two color image, a full color image, or a monochrome image based on the counted result of the block counting section.

2. The image color determining device according to claim 1,
wherein the image determining section determines that the determining color is present in the target image when the number of blocks indicating the determining color exceeds a predetermined first threshold value for each of the plurality of determining colors.

3. The image color determining device according to claim 2,
wherein the image determining section determines the target image as the full color image when the number of blocks indicating the determining color exceeds a predetermined second threshold value higher than the first threshold value for at least one chromatic color of the plurality of determining colors.

4. The image color determining device according to claim 2, further including a printer unit for selectively using a color material of the plurality of colors based on the determination result of the image determining section.

5. The image color determining device according to claim 4,
wherein when determined that only one chromatic color is present and black is present out of the plurality of determining colors in the target image in the determination of the image determining section, the print unit uses only the color material of black and prints while emphasizing a portion corresponding to the chromatic color in the target image.

6. The image color determining device according to claim 1, further including:
a scanning unit for scanning a document and acquiring an image; and
a transforming section for transforming resolution of the image acquired by the scanning unit; wherein
the target image is an image before the resolution is transformed by the transforming section.

7. The image color determining device according to claim 1, further including:
a copy unit for scanning a document and copying on a recording paper;
a setting unit for setting a magnification of copy by the copy unit; and
an averaging section for averaging values for every plurality of pixels in the target image to obtain unit data; wherein
the averaging section changes the number of pixels to be averaged according to the magnification.

8. An image color determining device for determining a color of a target image, the image color determining device comprising:
a counting section for counting the number of elements related to each of a predetermined plurality of determining colors based on the color of the element contained in the target image;
an image determining section for determining a color present in the target image out of the plurality of determining colors based on the counted result of the counting section; and
an output section for outputting the target image as either color or monochrome; wherein
the output section outputs the target image in monochrome while emphasizing a portion corresponding to one of the two colors when the image determining section determines that only two colors are present in the target image.

9. The image color determining device according to claim 8,
wherein
the output section outputs the target image in monochrome while emphasizing a portion corresponding to a chromatic color when determined that one chromatic color and black out of the plurality of determining colors are present in the target image.

10. An image color determining method for determining a color of a target image, the method comprising the steps of:
(a) determining a color indicated by each of a plurality of blocks obtained by dividing the target image from a predetermined plurality of determining colors;
counting the number of blocks indicating the determining color for each of the plurality of determining colors based on the determination result of step (a); and
determining if the target image is a single color image, a two color image, a full color image, or a monochrome image based on the counted result of step (b).

11. The image color determining method according to claim 10, wherein the determining color is determined to be present in the target image when the number of blocks indicating the determining color exceeds a predetermined first threshold value for each of the plurality of determining colors in the image determining step.

12. The image color determining method according to claim 11, wherein the target image is determined as the full color image when the number of blocks indicating the determining color exceeds a predetermined second threshold value higher than the first threshold value for at least one chromatic color of the plurality of determining colors in the image determining step.

13. The image color determining method according to claim 11, further including a step of printing of selectively using a color material of the plurality of colors based on the determination result of the image determining step.

14. The image color determining method according to claim 13, wherein when determined that only one chromatic color is present and black is present out of the plurality of determining colors in the target image in the determination of the image determining step, only the color material of black is used and printing is performed while emphasizing a portion corresponding to the chromatic color in the target image in the printing step.

15. The image color determining method according to claim 10, further including the steps of:
scanning a document and acquiring an image; and
transforming the resolution of the image acquired by the scanning step; wherein
the target image is an image before the resolution is transformed in the transforming step.

16. The image color determining method according to claim 10, further including the steps of:
scanning a document and copying on a recording paper;
setting a magnification of copy by the copy step; and
averaging values for every plurality of pixels in the target image to obtain unit data; wherein
the number of pixels to be averaged is changed according to the magnification in the averaging step.

17. An image color determining method for determining a color of a target image, the method comprising the steps of:
(a) counting the number of elements related to each of a predetermined plurality of determining colors based on the color of the element contained in the target image;
(b) determining a color in the target image out of the plurality of determining colors based on the counted result of step (a); and
(c) outputting the target image as either color or monochrome;
wherein
in step (c), the target image is output in monochrome while emphasizing a portion corresponding to one of the two colors when determined that only two colors are present in the target image in step (b).

18. The image color determining method according to claim 17, wherein
in output step, the target image is output in monochrome while emphasizing a portion corresponding to a chromatic color when determined that one chromatic color and black out of the plurality of determining colors are present in the target image.
